# EUROPÄISCHE PATENTSCHRIFT

(11) **EP 2 030 049 B1**
(45) Veröffentlichungstag und Bekanntmachung des Hinweises auf die Patenterteilung: **04.11.2015**
(21) Anmeldenummer: 07727638.4
(22) Anmeldetag: 02.04.2007
(51) Int. Cl.: G01V 3/15

(54) **ORTUNGSGERÄT**
LOCATING DEVICE
APPAREIL DE LOCALISATION

(30) Priorität: 02.06.2006 DE 102006025861
(43) Veröffentlichungstag der Anmeldung: 04.03.2009
(73) Patentinhaber: Robert Bosch GmbH, 70442 Stuttgart (DE)
(72) Erfinder: MAHLER, Michael, 70771 Leinfelden-Echterdingen (DE); HOFFMANN, Ulli, 75223 Niefern-Oeschelbronn (DE); KRAPF, Reiner, 72770 Reutlingen (DE); WIELAND, Christoph, 71083 Herrenberg-Kuppingen (DE)
(86) Internationale Anmeldenummer: PCT/EP2007/053166
(87) Internationale Veröffentlichungsnummer: WO 2007/141062

(56) Entgegenhaltungen:
- EP-A- 1 341 005
- WO-A-00/79305
- WO-A-99/27391
- WO-A-2005/088348
- US-A1- 2005 280 425

## Beschreibung

### Stand der Technik

Die Erfindung geht aus von einem Ortungsgerät zur Ortung von Objekten in einem Untersuchungsgegenstand nach dem Oberbegriff des Anspruchs 1.

Es ist ein Ortungsgerät bekannt, welches im Betrieb das Vorhandensein und die Position von Objekten in Baustoffen, wie z. B. von Rohren, Kabeln, Armierungen in Wänden, Decken oder Fußböden, einem Bediener anzeigt. Das Ortungsgerät weist außerdem Wälzkörper auf, durch welche es zu einem Abtasten eines Untersuchungsgegenstands entlang einer Oberfläche des Untersuchungsgegenstands bewegt werden kann. Hierbei ist das Ortungsgerät mit Wegsensoren versehen, mittels welcher das Anzeigen eines detektierten Objekts mit einer verfahrenen Wegstrecke korreliert wird.

Aus der EP 1 341 005 A2 ist ein multifunktionaler Objekt Sensor bekannt, der es ermöglicht, Objekte, die hinter oder in einer Wand verborgen sind, zu detektieren. Die Vorrichtung der EP 1 341 005 A2 weist ein Sensierungssystem zur Lokalisierung des eingeschlossenen Objektes und eine Reihe weiterer Funktionen auf. Die zusätzlichen Funktionen dieser Vorrichtung umfassen beispielsweise einen Abstandsdetektor, der es ermöglicht, den Abstand des Messgerätes zu einer weiteren, zweiten Wand zu vermessen. Darüber hinaus besitzt diese Vorrichtung auch ein "Tracking System", welches es ermöglicht, die auf der zu untersuchenden Fläche zurückgelegte Strecke zu messen und anzuzeigen. Über eine optische, eine akustische oder auch eine numerische Ausgabeeinheit kann die Lokalisierung eines Objektes oder aber auch Abstandsdaten ausgegeben werden.

Aus der WO 00/79305 A1 sowie der US 2005/0280425 A1 sind jeweils Ortungsgeräte in Form sogenannter "Studfinder" bekannt, welche eine optische Ausgabe in Form eines Lichtsignals aufweisen, wobei das Lichtsignal aktiviert wird, wenn das Gerät ein Objekt lokalisiert.

### Vorteile der Erfindung

Die Erfindung geht aus von einem Ortungsgerät zur Ortung von Objekten in einem Untersuchungsgegenstand, mit einem Grundkörper, einer Sensoreinheit zur Erfassung einer Bewegungskenngröße bei einer Bewegung des Grundkörpers relativ zum Untersuchungsgegenstand, einer Ausgabeeinheit und einer Steuereinheit, die in Verbindung mit der Ausgabeeinheit zur Ausgabe einer Information anhand der Bewegungskenngröße vorgesehen ist.

Es wird vorgeschlagen, dass die Ausgabeeinheit eine Lichtsignaleinheit aufweist, die zur Ausgabe der Information mittels eines Lichtsignals vorgesehen ist. Dadurch kann eine schnelle Ausgabe der Information in einer für einen Bediener intuitiven Form erreicht werden. Besonders vorteilhaft kann eine sichere Ausgabe der Information durch eine gesteigerte Sichtbarkeit der Ausgabeeinheit bei ungünstigen Lichtverhältnissen oder in Positionen des Elektrogeräts, bei denen ein Ablesen der Ausgabeeinheit erschwert ist, erzielt werden.

Unter einer "Bewegungskenngröße" soll insbesondere eine Kenngröße verstanden werden, mittels welcher eine Eigenschaft der Bewegung des Grundkörpers relativ zum Untersuchungsgegenstand, wie insbesondere eine Weglänge oder eine Richtung der Bewegung, ermittelt werden kann. Zur Erfassung der Bewegungskenngröße können bei der Sensoreinheit unterschiedliche Verfahren eingesetzt werden. Die Erfassung kann z. B. optomechanisch erfolgen, wie beispielsweise mit Hilfe des Prinzips einer Lichtschranke. Außerdem kann ein optisches Verfahren eingesetzt werden, indem eine Oberflächenstruktur des Untersuchungsgegenstands zur Erfassung einer Bewegungsrichtung und/oder einer Wegstrecke bei der Bewegung des Grundkörpers analysiert wird, wie z. B. mittels eines CCD-Sensors (Charge-Coupled Device oder ladungsgekoppeltes Bauteil). Dabei kann die Oberfläche beleuchtet werden und es kann zu einer präzisen Analyse der Oberfläche ein Laserstrahl verwendet werden. Das Einsetzen eines elektronischen Verfahrens zur Erfassung der Bewegungskenngröße, wie insbesondere mit Hilfe eines Radarsignals, ist ebenfalls denkbar. Ist das Ortungsgerät zur Ortung von Objekten mittels eines Radarverfahrens ausgebildet, kann eine zur Ortung eingesetzte Radareinheit zusätzlich zur Erfassung der Bewegungskenngröße genutzt werden.

Unter einem "Lichtsignal" soll insbesondere ein Signal verstanden werden, bei dem eine Information mittels einer Eigenschaft eines gesendeten Lichts, wie insbesondere einer Lichtstärke, einer Farbe, einer Blinkfrequenz, einer veränderlichen Position eines Aussendungspunkts usw., einem Bediener übermittelt wird. Hierbei kann die Lichtsignaleinheit ein Lichtelement zur Erzeugung von Licht aufweisen, welches z. B. als LED (Light Emitting Diode oder lichtemittierende Diode), und zwar als Halbleiter-LED oder organische LED, als Glühlampe usw. ausgeführt ist. Außerdem ist der Einsatz von weiteren Mitteln zur Erzeugung von Lichteffekten denkbar. Beispielsweise kann das Lichtelement aus einem photolumineszenten, insbesondere fluoreszenten und/oder phosphoreszenten Material hergestellt werden, das während bzw. nach einer Anregung durch Bestrahlung mit sichtbarem oder ultraviolettem Licht abstrahlt. Ferner kann das Lichtelement aus einem e-lektrolumineszenten Material hergestellt werden, das durch Anregung elektrischer Felder bzw. elektrischer Entladungsvorgänge Licht aussendet. Beispielsweise kann das Lichtelement als Leuchtfolie ausgebildet sein.

Es wird außerdem vorgeschlagen, dass die Steuereinheit in Verbindung mit der Lichtsignaleinheit dazu vorgesehen ist, bei der Bewegung des Grundkörpers eine Bewegung eines georteten Objekts relativ zum Grundkörper anzuzeigen. Dadurch kann ein Bediener das Ortungsgerät schnell und präzise in eine gewünschte Position relativ zum georteten Objekt bringen. Ist das Ortungsgerät mit einem Betriebsmodus versehen, in dem der Bediener einen Bezugspunkt des Untersuchungsgegenstands, wie z. B. eine gewünschte Bohrposition, festlegen kann, ist es denkbar, dass bei der Bewegung des Grundkörpers eine Bewegung des Bezugspunkts relativ zum Grundkörper angezeigt wird.

Eine einfache und intuitive Anzeige der Information kann erreicht werden, wenn der Grundkörper ein Führungsmittel zum Führen entlang des Untersuchungsgegenstands in einer Bewegungsrichtung aufweist und die Lichtsignaleinheit Lichtelemente umfasst, die eine in Bewegungsrichtung ausgerichtete Reihe bilden. Das Führungsmittel ist vorzugsweise als Wälzkörper ausgebildet, welcher am Grundkörper montiert ist. Alternativ oder zusätzlich kann das Führungsmittel als Gleitfläche des Grundkörpers ausgebildet sein, welche zu dessen Gleiten auf dem Untersuchungsgegenstand dient.

In diesem Zusammenhang wird vorgeschlagen, dass die Reihe zwei Genauigkeitsbereiche aufweist, die jeweils von einem Satz von Lichtelementen gebildet sind und jeweils einen unterschiedlichen Abstand zwischen zwei benachbarten Lichtelementen aufweisen. Es kann dadurch eine präzise Ausgabe der Information in zumindest einem bevorzugten Bereich des Grundkörpers erreicht werden. Durch einen feinen Genauigkeitsbereich kann ein feines Verstellen des Grundkörpers zum Erreichen einer bevorzugten Position des Grundkörpers am Untersuchungsgegenstand durchgeführt werden.

In einer weiteren Ausgestaltung der Erfindung wird vorgeschlagen, dass die Lichtsignaleinheit ein Lichtelement aufweist und die Steuereinheit in Verbindung mit dem Lichtelement zum Markieren einer Kante des Grundkörpers vorgesehen ist. Dadurch kann ein Bediener auf einfache und intuitive Weise über eine Position der Kante relativ zu einer Referenzposition, wie z. B. der Position eines georteten Objekts oder einem durch den Bediener festgelegten Bezugspunkt, informiert werden. Ferner kann er dazu eingeladen werden, an der Kante eine Markierung anzuzeichnen.

Außerdem wird vorgeschlagen, dass die Steuereinheit zur Ausgabe des Lichtsignals in Verbindung mit der Lichtsignaleinheit mittels zumindest zweier positiver Lichtstärken vorgesehen ist, wodurch eine vorteilhafte Flexibilität in der Ausgabe erreicht werden kann. Es kann bei einem Lichtelement das Lichtsignal mit einer zeitlich veränderlichen Lichtstärke emittiert werden, oder das Lichtsignal kann mit zumindest zwei Lichtelementen emittiert werden, welche gleichzeitig jeweils mit einer unterschiedlichen Lichtstärke betrieben werden. Unter einer "positiven" Lichtstärke soll insbesondere eine Lichtstärke verstanden werden, welche von null verschieden ist.

Eine Flexibilität in der Ausgabe kann weiter gesteigert werden, wenn die Steuereinheit in Verbindung mit der Lichtsignaleinheit zur Ausgabe des Lichtsignals mittels zumindest einer Blinkfrequenz vorgesehen ist.

In einer vorteilhaften Ausführungsform der Erfindung wird vorgeschlagen, dass das Ortungsgerät eine Bedienerschnittstelle aufweist, die in Zusammenwirken mit der Lichtsignaleinheit zur Ein- und/oder Ausgabe einer Betriebsinformation vorgesehen ist. Dadurch kann eine kompakte Bauweise erreicht werden, da auf weitere Anzeigeelemente für die Bedienerschnittstelle verzichtet werden kann. Die Bedienerschnittstelle ist z. B. als eine menügesteuerte Bedieneroberfläche, welche auf einem Display angezeigt wird, ausgebildet.

Es wird ferner vorgeschlagen, dass die Steuereinheit in Verbindung mit der Lichtsignaleinheit dazu vorgesehen ist, eine Information über eine Art eines georteten Objekts auszugeben. Dadurch kann eine schnelle und sichere Identifikation eines georteten Objekts, insbesondere bei einer erschwerten Lesbarkeit der Ausgabeeinheit, erreicht werden. Hierzu können verschiedene Arten von Objekten verschiedenen Lichteigenschaften des Lichtsignals, wie Farbe, Blinkfrequenz, Leuchtstärke usw., zugeordnet werden.

In einer weiteren Ausbildungsform der Erfindung wird vorgeschlagen, dass die Ausgabeeinheit eine akustische Einheit zur Ausgabe eines akustischen Signals aufweist und die Steuereinheit dazu vorgesehen ist, das akustische Signal einem Lichtsignal zuzuordnen, wodurch ein besonders effektives und sicheres Übertragen der Information, insbesondere bei ungünstigen Bedienverhältnissen, erreicht werden kann. Bei einer Bewegung des Grundkörpers kann das Erreichen einer gewünschten Position des Grundköpers einem Bediener durch eine Tonausgabe signalisiert werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein an einer Wand positioniertes Ortungsgerät mit einem Display und einer Reihe von Lichtelementen,
- Fig. 2: eine Schaltung von internen Komponenten des Ortungsgeräts in einer schematischen Darstellung,
- Fig. 3a - Fig. 3d: das Ortungsgerät in vier verschiedenen Positionen relativ zu einem Objekt im Untersuchungsgegenstand,
- Fig. 4a - Fig. 4j: verschiedene Ausgestaltungen von Lichtelementen des Ortungsgeräts und
- Fig. 5: die Lichtelemente und das Display mit einer angezeigten Bedieneroberfläche.

### Beschreibung der Ausführungsbeispiele

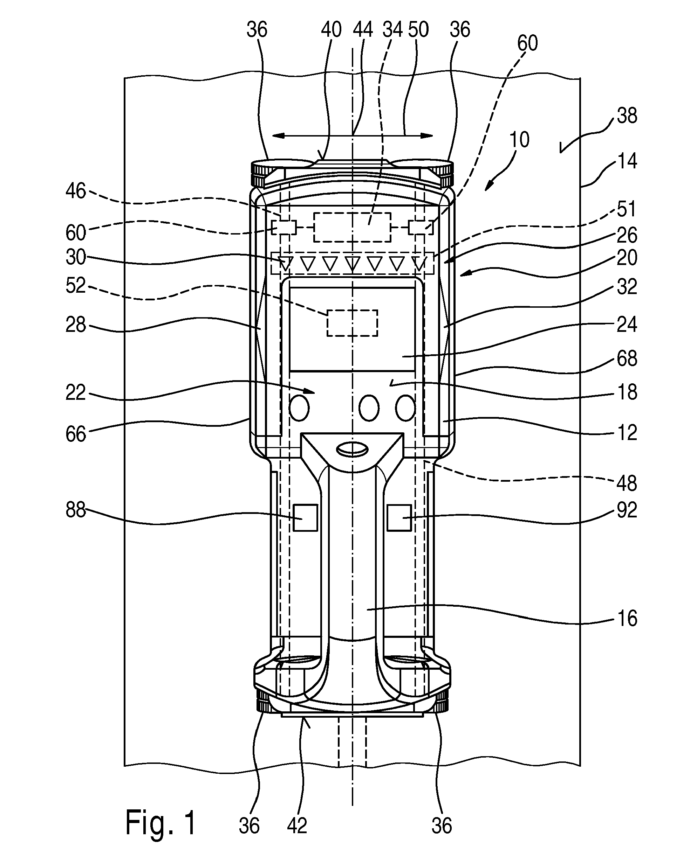

Figur 1 zeigt ein Ortungsgerät 10 mit einem als Gehäuse ausgebildeten Grundkörper 12. Es ist an einem als Wand ausgebildeten Untersuchungsgegenstand 14 positioniert. Am Grundkörper 12 ist ein Handgriff 16 befestigt, durch welchen das Ortungsgerät 10 durch einen Bediener gehalten werden kann. An einer Bedienseite 18 des Grundkörpers 12 sind eine Ausgabeeinheit 20 zur Ausgabe einer Information an einen Bediener und eine Eingabeeinheit 22 zur Eingabe einer Information durch einen Bediener angebracht, welche einen Satz von Betätigungsknöpfen aufweist. Die Ausgabeeinheit 20 weist ein LC-Display 24 (Liquid Cristal Display oder Flüssigkristallbildschirm) und eine Lichtsignaleinheit 26 auf. Diese umfasst einen Satz von Lichtelementen 28, 30, 32, die jeweils eine als LED (lichtemittierende Diode) ausgebildete Lichtquelle aufweisen. Die Ausgabeeinheit 20 ist im Betrieb von einer Steuereinheit 34 gesteuert. Es ist eine Ausbildung des Ortungsgeräts 10 denkbar, wobei auf das LC-Display 24 verzichtet wird.

Es sind außerdem vier als Räder ausgebildete Führungsmittel 36 am Grundkörper 12 montiert, welche in der gezeigten Position an einer Oberfläche 38 des Untersuchungsgegenstands 14 anliegen. Es sind jeweils zwei der Führungsmittel 36 im Bereich einer Seitenfläche 40 bzw. 42 des Grundkörpers 12 angeordnet, welche senkrecht zu der durch eine Mittelachse 44 bezeichneten Haupterstreckungsrichtung des Grundkörpers 12 ausgerichtet ist. Die Führungsmittel 36 sind paarweise durch eine Achse 46 bzw. 48 verbunden. Die Achsen 46, 48 erstrecken sich beidseitig des LC-Displays 24 in der Haupterstreckungsrichtung des Grundkörpers 12. Die Führungsmittel 36 dienen dazu, den Grundkörper 12 in einer Bewegungsrichtung 50 parallel zur Oberfläche 38 des Untersuchungsgegenstands 14 zu führen. Die Bewegungsrichtung 50 ist senkrecht zur Haupterstreckungsrichtung des Grundkörpers 12 ausgerichtet. Die Lichtelemente 30 bilden eine Reihe 51, die in Bewegungsrichtung 50 ausgerichtet ist.

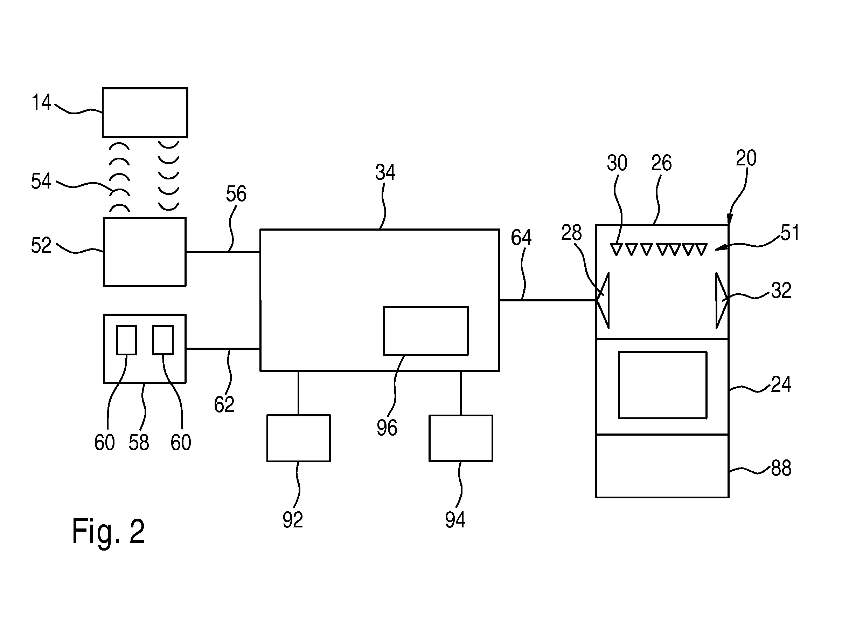

Durch eine vom Bediener angetriebene Bewegung des Grundkörpers 12 kann der Untersuchungsgegenstand 14 zur Ortung von Objekten, die unsichtbar unterhalb der Oberfläche 38 angeordnet sind, abgetastet werden. Hierzu weist das Ortungsgerät 10 eine Ortungseinheit 52 auf, welche unterhalb des LC-Displays 24 angeordnet ist. Diese umfasst eine Sendeeinheit zum Senden eines Messsignals 54 (siehe Figur 2), welches z. B. als Radar-Signal oder UWB-Signal (Ultrabreitbandsignal) ausgebildet ist, eine Empfangseinheit zum Empfangen des Messsignals 54 nach dessen Wechselwirkung mit dem Untersuchungsgegenstand 14 und eine Auswerteeinheit zum Auswerten des Messsignals 54 (in den Figuren nicht gezeigt).

Ein Zusammenwirken der Steuereinheit 34 mit der Ortungseinheit 52 und der Ausgabeeinheit 20 ist anhand von Figur 2 näher beschrieben. Die Auswertung des empfangenen Messsignals 54 liefert eine Ortungsinformation 56, die mit Hilfe der Ausgabeeinheit 20 ausgegeben werden kann. Diese Ortungsinformation 56 ist vorzugsweise eine Information über ein detektiertes Objekt, wie eine Art des Objekts (z. B. eine elektrische Leitung, eine Wasserleitung usw.), eine Tiefe im Untersuchungsgegenstand 14, eine Position des Objekts relativ zum Grundkörper 12 in Bewegungsrichtung 50 usw. Insbesondere eine Position des Objekts relativ zum Grundkörper 12 kann besonders einfach und intuitiv mittels der Lichtsignaleinheit 26 angezeigt werden. Wird ein Objekt im Untersuchungsgegenstand 14 detektiert und ist die Position dieses Objekts vom Grundkörper 12 überdeckt, leuchtet eines der Lichtelemente 28, 30, 32, dessen Position der Position des Objekts relativ zum Grundkörper 12 entspricht. Bei ungünstigen Lichtverhältnissen oder wenn sich das Ortungsgerät 10 in einer Lage befindet, welche ein Ablesen des LC-Displays 24 erschwert, kann der Bediener durch das vom Lichtelement 28, 30 oder 32 emittierte Licht über das Vorhandensein des Objekts informiert werden.

Das Ortungsgerät 10 kann ferner eine Information über eine vom Bediener angetriebene Bewegung des Grundkörpers 12 relativ zum Untersuchungsgegenstand 14 ausgeben. Hierzu weist das Ortungsgerät 10 eine Sensoreinheit 58 auf, die zwei als Wegsensoren ausgebildete Sensormittel 60 umfasst. Die Sensormittel 60 sind jeweils mit einer der Achsen 46, 48 gekoppelt (siehe Figur 1).

In einer Ausführungsvariante ist denkbar, dass die Sensoreinheit 58 nur ein Sensormittel 60 umfasst. Dieses Sensormittel 60 ist vorzugsweise mit einer der Achsen 46, 48 gekoppelt. Dabei können die Achsen 46, 48 miteinander mechanisch gekoppelt sein.

Die Sensormittel 60 weisen jeweils ein Segmentrad, das an einem Teilbereich der Achsen 46, 48 befestigt ist, zumindest eine Sendeeinheit zum Erzeugen eines Lichtstrahls und eine Empfangseinheit zum Empfangen des Lichtstrahls (in der Figur nicht gezeigt) auf. Die Sensormittel 60 erfassen mit Hilfe des Prinzips einer Lichtschranke ein Weginkrement bei der Bewegung des Grundkörpers 12 anhand einer durch das Bewegen angetriebenen Rotation des Segmentrads. Dieses Prinzip ist bekannt und wird im Rahmen dieser Beschreibung nicht näher erläutert. Die Sensormittel 60 geben jeweils eine als elektrisches Signal, wie z. B. als eine elektrische Spannung, ausgebildete Bewegungskenngröße 62 aus. Anhand dieser Bewegungskenngröße 62 kann eine Information über eine Bewegung des Grundkörpers 12 gewonnen werden, wie insbesondere eine gefahrene Wegstrecke des Grundkörpers 12 und/oder eine Richtung der Bewegung. Diese Information kann durch die Ausgabeeinheit 20 dem Bediener ausgegeben werden. Es wird angenommen, dass ein Objekt im Untersuchungsgegenstand 14 detektiert ist, wobei die Position des Objekts relativ zum Grundkörper 12 durch das Leuchten eines Lichtelements 28, 30 oder 32 signalisiert ist. Bewegt der Bediener den Grundkörper 12 in der Bewegungsrichtung 50, wird von der Steuereinheit 34 anhand der Bewegungskenngröße 62 ein Steuersignal 64 erzeugt, das das Einschalten von einem weiteren Lichtelement 28, 30 oder 32 der Lichtsignaleinheit 26 steuert. Beispielsweise kann ein Umschalten zwischen zwei Lichtelementen 28, 30 oder 32 gesteuert werden, nachdem eine bestimmte Anzahl von Weginkrementen, welche von den Sensormitteln 60 erfasst werden, erreicht wird. Durch ein Lichtsignal, und zwar hier das sukzessive Leuchten von benachbarten Lichtelementen 28, 30 oder 32 kann eine Bewegung der Position des Objekts relativ zum Grundkörper 12 vom Bediener besonders intuitiv verfolgt werden. Dieses Lichtsignal ist mit der von der Sensoreinheit 58 erfassten Bewegungskenngröße 62 korreliert und wird durch die Steuereinheit 34 unabhängig vom Messsignal 54 der Ortungseinheit 52 angetrieben.

Innerhalb der Reihe 51 ist eines der Lichtelemente 30 auf der Mittelachse 44 des Grundkörpers 12 angeordnet. Dadurch kann ein Bediener den Grundkörper 12 bewegen und dabei durch die Lichtsignaleinheit 26 die Position des Objekts verfolgen, bis das Objekt unter der Mitte des Grundkörpers 12 positioniert ist. In Figur 1 sind durch die Bezugszeichen 66 und 68 zwei Kanten des Grundkörpers 12 bezeichnet, welche sich in Haupterstreckungsrichtung des Grundkörpers 12 erstrecken und der Oberfläche 38 des Untersuchungsgegenstands 14 zugewandt sind. Befindet sich das detektierte Objekt im Bereich der Kante 66 bzw. 68, kann diese Position des Objekts durch ein Leuchten der Lichtelemente 28 bzw. 32, die beidseitig der Reihe 51 am Rand des Grundkörpers 12 montiert sind, signalisiert werden. Diese Lichtelemente 28, 32 weisen jeweils die Form eines Pfeils auf, dessen Spitze, vom Grundkörper 12 aus betrachtet, nach außen orientiert ist. Durch ein Leuchten des Lichtelements 28 bzw. 32 kann die Kante 66 bzw. 68 markiert werden, wodurch der Bediener dazu eingeladen werden kann, die Position des Objekts auf der Oberfläche 38 anzuzeichnen.

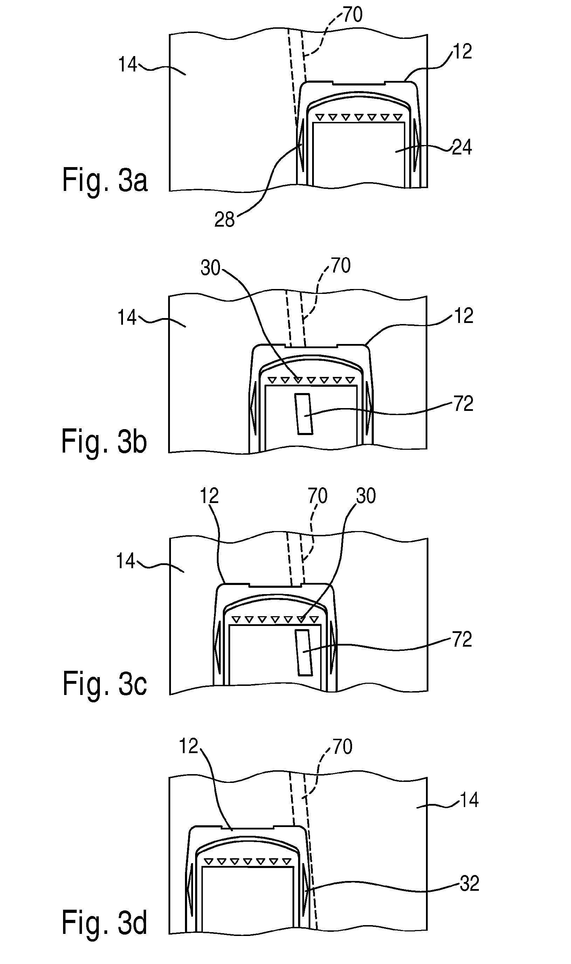

In Figur 3a ist das Ortungsgerät 10 in einer der oben erwähnten Positionen dargestellt, bei welcher ein Objekt 70 (in der Figur gestrichelt dargestellt) sich unter der Kante 66 des Grundkörpers 12 befindet. Dabei leuchtet das Lichtelement 28. In den Figuren 3a bis 3d ist ein Leuchten eines der Lichtelemente 28, 30 oder 32 durch ein Bezeichnen mit dem entsprechenden Bezugszeichen angedeutet. Ausgehend von der in Figur 3a gezeigten Position des Grundkörpers 12 wird dieser durch einen Bediener bewegt, bis das Objekt 70 sich im Bereich der Kante 68 befindet, was in Figur 3d gezeigt ist. Wie den Figuren 3b und 3c zu entnehmen ist, leuchten Lichtelemente 30 der Reihe 51 während der Bewegung sukzessiv auf. Ferner wird in den in den Figuren 3b und 3c gezeigten Positionen das Vorhandensein des Objekts 70 durch das Anzeigen eines Symbols 72 mittels des LC-Displays 24 angezeigt.

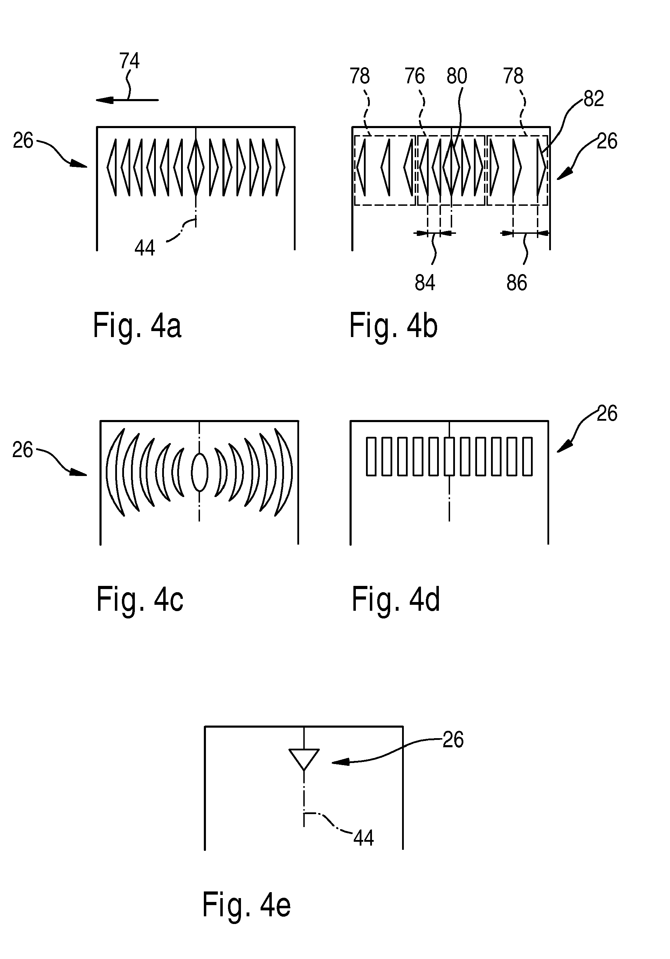

In den Figuren 4a bis 4h sind verschiedene Ausführungsformen der Reihe 51 der Lichtsignaleinheit 26 dargestellt. In Figur 4a ist die Reihe 51 in zwei Sätze geteilt. Ein erster Satz auf der linken Seite der Mittelachse 44 weist Lichtelemente auf, die in Form von Pfeilen ausgebildet sind, deren Spitze in eine Richtung 74 senkrecht zur Mittelachse 44 orientiert ist, während ein zweiter Satz auf der rechten Seite der Mittelachse 44 Pfeile mit einer in einer der Richtung 74 entgegen gesetzten Richtung ausgerichteten Spitze umfasst. Auf der Mittelachse 44 liegen Lichtelemente der beiden Sätze aneinander.

Figur 4b zeigt eine Ausführungsvariante der Reihe 51 aus Figur 4a. Diese weist zwei Genauigkeitsbereiche 76, 78 auf. Der erste Genauigkeitsbereich 76 ist im Bereich der Mittelachse 44 von einem Satz von Lichtelementen 80 gebildet, wobei zwei benachbarte Lichtelemente 80 voneinander mit einem Abstand 84 getrennt sind. Ein Satz von Lichtelementen 82 bildet den zweiten Genauigkeitsbereich 78, wobei zwei Lichtelemente 82 durch einen Abstand 86 voneinander getrennt sind. Durch den Abstand 84, welcher kleiner als der Abstand 86 ist, kann eine Position eines detektierten Objekts im Bereich der Mittelachse 44 mit einer erhöhten Genauigkeit signalisiert werden. Eine mittige Position des Objekts relativ zum Grundkörper 12 kann somit durch ein feines Verstellen des Grundkörpers 12 erreicht werden.

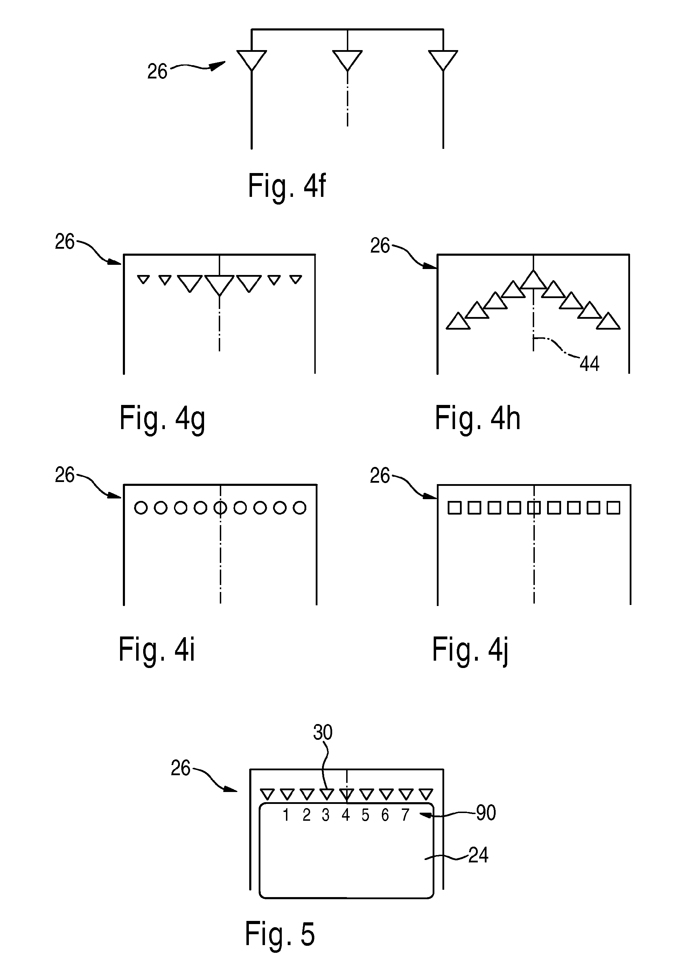

Alternativ zu den pfeilförmigen Lichtelementen sind bogenförmige, balkenförmige, kreisförmige oder quadratförmige Lichtelemente einsetzbar, die in den Figuren 4c, 4d, 4i bzw. 4j dargestellt sind. Weitere geometrische Ausgestaltungen der Lichtelemente sind denkbar. Es ist des Weiteren eine Ausbildung der Lichtsignaleinheit 26 mit einem einzigen Lichtelement denkbar, welches vorzugsweise auf der Mittelachse 44 des Grundkörpers 12 angeordnet ist, wie der Figur 4e zu entnehmen ist. Zusätzlich zu diesem mittigen Lichtelement können weitere Lichtelemente im Bereich der Ränder des Grundkörpers 12 angeordnet sein, wie in Figur 4f zu sehen ist, die eine Position eines Objekts im Bereich der Kanten 66, 68 signalisieren können. Wie in Figur 4g dargestellt ist, können die Lichtelemente verschiedene Größen aufweisen. Die Lichtelemente können ferner durch ihre Anordnung ein Motiv bilden. In Figur 4h sind die Lichtelemente beispielsweise so angeordnet, dass sie einen Pfeil bilden, welcher in die Haupterstreckungsrichtung des Grundkörpers 12 weist und dessen Spitze auf der Mittelachse 44 liegt. Alternativ ist auch eine Bogenform denkbar.

In allen dargestellten Ausführungsformen der Lichtsignaleinheit 26 kann die Flexibilität in der Ausgabe eines Lichtsignals erhöht werden, wenn die Lichtelemente, z. B. die Lichtelemente 28, 30, 32 aus Figur 1, zur Erzeugung von Licht mit unterschiedlichen Farben vorgesehen sind. Dabei kann die Reihe 51 mehrere Lichtelemente 30 aufweisen, die zum Leuchten mit jeweils einer unterschiedlichen Farbe vorgesehen sind, und/oder es kann in der Reihe 51 ein Lichtelement 30 eingesetzt werden, welches zum Leuchten mit unterschiedlichen Farben vorgesehen ist. In einem Betriebsmodus des Ortungsgeräts 10 wird die Art eines georteten Objekts durch eine bestimmte angezeigte Farbe gekennzeichnet.

Die Flexibilität kann weiter erhöht werden, wenn ein Lichtsignal mit Hilfe von mehreren Lichtstärken ausgegeben wird. In einem weiteren Betriebsmodus des Ortungsgeräts 10 ist die Lichtstärke eines von einem der Lichtelemente 28, 30 oder 32 erzeugten Lichts abhängig von der Ortungsinformation 56 gesteuert, die von der Ortungseinheit 52 ausgegeben wird. Beispielsweise kann die Lichtstärke eines Lichtelements proportional zur Signalstärke des durch die Ortungseinheit 52 empfangenen Messsignals 54 sein.

In einem weiteren Betriebsmodus des Ortungsgeräts 10 wird von der Steuereinheit 34 eine Blinkfrequenz eines der Lichtelemente 28, 30 oder 32 anhand der Ortungsinformation 56 der Ortungseinheit 52 gesteuert. Wird z. B. eine elektrische Leitung durch die Ortungseinheit 52 detektiert, kann die Steuereinheit 34 ein Blinken eines die Position der Leitung signalisierenden Lichtelements 28, 30 oder 32 steuern, wodurch der Bediener auf ein Gefährdungspotential durch Stromschlag hingewiesen werden kann. Durch verschiedene Blinkfrequenzen können weitere Ortungsinformationen vermittelt werden, wie z. B. die Größe des Objekts, das Material des Objekts usw.

Ein weiterer Betriebsmodus des Ortungsgeräts 10 sieht vor, dass ein Lichtsignal mit Hilfe mehrerer Lichtelemente 30 ausgegeben wird, welche gleichzeitig leuchten. Dadurch kann in diesem Modus eine Information über eine Erstreckung in Bewegungsrichtung 50 eines detektierten Objekts vermittelt werden. Hiermit kann einfach eine Information über die Breite des detektierten Objekts dem Bediener angezeigt werden. Abhängig von der Objektbreite leuchtet eine bestimmte Anzahl von Lichtelementen 30. Hierbei können benachbarte Lichtelemente 30 mit verschiedenen Lichtstärken leuchten, wobei beispielsweise das Lichtelement, welches der Position des Objektmittelpunkts entspricht, mit der größten Lichtstärke leuchtet. Außerdem kann das Vorhandensein von mehreren Objekten, deren Position vom Grundkörper 12 überdeckt ist, durch ein simultanes Leuchten von mehreren Lichtelementen 28, 30 oder 32 signalisiert werden.

Es ist ferner ein akustischer Betriebsmodus des Ortungsgeräts 10 vorgesehen. Hierzu weist die Ausgabeeinheit 20 eine als Lautsprecher ausgebildete akustische Einheit 88 (siehe Figuren 1 und 2) auf. In diesem Modus korreliert die Steuereinheit 34 eine Tonausgabe durch die akustische Einheit 88 mit der Ausgabe eines bestimmten Lichtsignals durch die Lichtsignaleinheit 26. Es kann z. B. das Vorhandensein einer elektrischen Leitung durch ein akustisches Signal vermittelt werden, oder es kann das Erreichen einer gewünschten Position des Grundkörpers 12 relativ zu einem detektierten Objekt akustisch signalisiert werden, z. B. wenn ein Lichtelement 30 auf der Mittelachse 44 des Grundkörpers 12 oder das Lichtelement 28 bzw. 32 an der Kante 66 bzw. 68 leuchtet.

Die Lichtsignaleinheit 26 kann ferner in Kombination mit dem LC-Display 24 genutzt werden. Dies ist in Figur 5 gezeigt. Auf dem LC-Display 24 wird im Vorfeld einer Messung eine Bedienerschnittstelle 90 in Form eines Menüs angezeigt, welches den Bediener einlädt, einen bestimmten Betriebsmodus oder eine Option mit Hilfe der Eingabeeinheit 22 auszuwählen. Es kann durch ein Leuchten eines der Lichtelemente 30 angezeigt werden, welcher der Betriebsmodi, die mittels der Bedienerschnittstelle 90 angezeigt sind, ausgewählt ist.

Die hier beschriebenen Betriebsmodi und die Bedienerschnittstelle 90 sowie weitere Programme zur Konfiguration des Ortungsgeräts 10 und zum Zusammenwirken der Steuereinheit 34 mit den an sie angeschlossenen Einheiten, wie z. B. Programme zur Bearbeitung der Bewegungskenngröße 62 und der Ortungsinformation 56, sind in einer Speichereinheit 96 der Steuereinheit 34 gespeichert.

Das Ortungsgerät 10 weist ferner eine Schnittstelle 92 zur Herstellung einer Datenverbindung mit einer externen Dateneinheit auf, wie z. B. ein PDA, ein Laptop, ein Handy usw. Die Schnittstelle 92 ist in diesem Beispiel zu einer drahtlosen Datenübertragung vorgesehen und ist als Bluetooth-Schnittstelle ausgebildet. In einer weiteren Ausführungsvariante kann die Schnittstelle 92 z. B. als Infrarotschnittstelle ausgeführt sein. Alternativ oder zusätzlich kann die Schnittstelle 92 zu einer Datenübertragung mittels einer Kabelverbindung vorgesehen sein. Beispielsweise kann die Schnittstelle 92 als USB-Schnittstelle ausgebildet sein. Durch die Schnittstelle 92 kann die Ortungsinformation 56 und/oder eine Information, welche anhand der Bewegungskenngröße 62 ermittelt worden ist, wie eine Wegstrecke des Grundkörpers 12, der externen Dateneinheit übertragen werden. Alternativ oder zusätzlich zu dieser Datenübertragung können diese Informationen in eine interne Speichereinheit 94 des Ortungsgeräts 10 gespeichert werden.

## Patentansprüche

1. Ortungsgerät zur Ermittlung einer Ortungsinformation über ein Objekt in einem Untersuchungsgegenstand (14), mit einem Grundkörper (12), einer Ortungseinheit (52), einer Sensoreinheit (58) zur Erfassung einer Bewegungskenngröße (62) bei einer Bewegung des Grundkörpers (12) relativ zum Untersuchungsgegenstand (14), insbesondere einer Weglänge und/oder einer Richtung, einer Ausgabeeinheit (20) und einer Steuereinheit (34), die in Verbindung mit der Ausgabeeinheit (20) zur Ausgabe der Ortungsinformation unter Verwendung des Meßsignals (54) der Ortungseinheit (52) und der Bewegungskenngröße (62) vorgesehen ist, **dadurch gekennzeichnet, dass** die Ausgabeeinheit (20) eine Lichtsignaleinheit (26) aufweist, die zur Ausgabe der Ortungsinformation mittels eines Lichtsignals vorgesehen ist, wobei die Steuereinheit (34) in Verbindung mit der Lichtsignaleinheit (26) dazu vorgesehen ist, bei der Bewegung des Grundkörpers (12) eine Bewegung des georteten Objekts (70) relativ zum Grundkörper (12) anzuzeigen.

2. Ortungsgerät nach Anspruch 1 **dadurch gekennzeichnet, dass** der Grundkörper (12) ein Führungsmittel (36) zum Führen entlang des Untersuchungsgegenstands (14) in einer Bewegungsrichtung (50) aufweist und die Lichtsignaleinheit (26) Lichtelemente (30) umfasst, die eine in Bewegungsrichtung (50) ausgerichtete Reihe (51) bilden.

3. Ortungsgerät nach Anspruch 2, **dadurch gekennzeichnet, dass** die Reihe (51) zwei Genauigkeitsbereiche (76, 78) aufweist, die jeweils von einem Satz von Lichtelementen (80, 82) gebildet sind und jeweils einen unterschiedlichen Abstand (84, 86) zwischen zwei benachbarten Lichtelementen (80, 82) aufweisen.

4. Ortungsgerät nach einem der vorhergehenden Ansprüche, **dadurch gekennzeichnet, dass** die Lichtsignaleinheit (26) ein Lichtelement (28, 32) aufweist und die Steuereinheit (34) in Verbindung mit dem Lichtelement (28, 32) zum Markieren einer Kante (66, 68) des Grundkörpers (12) vorgesehen ist.

5. Ortungsgerät nach einem der vorhergehenden Ansprüche, **dadurch gekennzeichnet, dass** die Steuereinheit (34) zur Ausgabe des Lichtsignals in Verbindung mit der Lichtsignaleinheit (26) mittels zumindest zweier positiver Lichtstärken vorgesehen ist.

6. Ortungsgerät nach einem der vorhergehenden Ansprüche, **dadurch gekennzeichnet, dass** die Steuereinheit (34) in Verbindung mit der Lichtsignaleinheit (26) zur Ausgabe des Lichtsignals mittels zumindest einer Blinkfrequenz vorgesehen ist.

7. Ortungsgerät nach einem der vorhergehenden Ansprüche, **gekennzeichnet durch** eine Bedienerschnittstelle (90), die in Zusammenwirken mit der Lichtsignaleinheit (26) zur Ein- und/oder Ausgabe einer Betriebsinformation vorgesehen ist.

8. Ortungsgerät nach einem der vorhergehenden Ansprüche, **dadurch gekennzeichnet, dass** die Steuereinheit (34) in Verbindung mit der Lichtsignaleinheit (26) dazu vorgesehen ist, eine Ortungsinformation (56) über eine Art eines georteten Objekts auszugeben.

9. Ortungsgerät nach einem der vorhergehenden Ansprüche, **dadurch gekennzeichnet, dass** die Ausgabeeinheit (34) eine akustische Einheit (88) zur Ausgabe eines akustischen Signals aufweist und die Steuereinheit (34) dazu vorgesehen ist, das akustische Signal einem Lichtsignal zuzuordnen.

## Claims

1. Locating device for determining an item of locating information concerning an object in a test item (14), having a base body (12), a locating unit (52), a sensor unit (58) for detecting a movement parameter (62) during a movement of the base body (12) relative to the test item (14), in particular a path length and/or a direction, an output unit (20) and a control unit (34) which is provided in conjunction with the output unit (20) for outputting the locating information with the use of the measuring signal (54) of the locating unit (52) and the movement parameter (62), **characterized in that** the output unit (20) has a light signal unit (26) which is provided for outputting the locating information by means of a light signal, the control unit (34) being provided in conjunction with the light signal unit (26) in order to display a movement of the located object (70) relative to the base body (12) during the movement of the base body (12).

2. Locating device according to Claim 1, **characterized in that** the base body (12) has a guide means (36) for guiding along the test item (14) in a direction of movement (50), and the light signal unit (26) comprises light elements (30) which form a row (51) aligned in the direction of movement (50).

3. Locating device according to Claim 2, **characterized in that** the row (51) has two accuracy ranges (76, 78), which are respectively formed by a set of light elements (80, 82) and respectively have a different spacing (84, 86) between two adjacent light elements (80, 82).

4. Locating device according to one of the preceding claims, **characterized in that** the light signal unit (26) has a light element (28, 32), and the control unit (34) is provided in conjunction with the light element (28, 32) in order to mark an edge (66, 68) of the base body (12).

5. Locating device according to one of the preceding claims, **characterized in that** the control unit (34) is provided for outputting the light signal in conjunction with the light signal unit (26) by means of at least two positive light intensities.

6. Locating device according to one of the preceding claims, **characterized in that** the control unit (34) is provided in conjunction with the light signal unit (26) for outputting the light signal by means of at least one flashing frequency.

7. Locating device according to one of the preceding claims, **characterized by** an operator interface (90) which is provided in cooperation with the light signal ,unit (26) for inputting and/or outputting an item of operating information.

8. Locating device according to one of the preceding claims, **characterized in that** the control unit (34) is provided in conjunction with the light signal unit (26) in order to output an item of locating information (56) concerning a type of a located object.

9. Locating device according to one of the preceding claims, **characterized in that** the output unit (20) has an acoustic unit (88) for outputting an acoustic signal, and the control unit (34) is provided in order to assign the acoustic signal to a light signal.

## Revendications

1. Dispositif de localisation pour la détection d'une information de localisation concernant un objet dans un objet d'analyse (14), avec un corps de base (12), une unité de localisation (52), une unité de capteur (58) pour la détection d'un indicateur de mouvement (62) lors d'un mouvement du corps de base (12) par rapport à l'objet d'analyse (14), en particulier d'une longueur de trajet et/ou d'une direction, une unité de restitution (20) et une unité de commande (34) prévue en association avec l'unité de restitution (20), pour la restitution d'une information de commande à l'aide du signal de mesure (54) de l'unité de localisation (52) et de l'indicateur de mouvement (62), **caractérisé en ce que** l'unité de restitution (20) comporte une unité de signaux lumineux (26) destinée à délivrer l'information de localisation au moyen d'un signal lumineux (26), l'unité de commande (34) en association avec l'unité de signaux lumineux (26) étant destinée à indiquer un mouvement de l'objet localisé (70) par rapport au corps de base (12) lors d'un mouvement du corps de base (12).

2. Dispositif de localisation selon la revendication 1, **caractérisé en ce que** le corps de base (12) comporte un moyen de guidage (36) destiné au guidage le long de l'objet d'analyse (14) dans une direction de déplacement (50), et **en ce que** l'unité de signaux lumineux (26) comprend des éléments lumineux (30) formant une rangée (51) orientée dans la direction de déplacement (50).

3. Dispositif de localisation selon la revendication 2, **caractérisé en ce que** la rangée (51) comporte deux zones de précision (76, 78) respectivement formées par une série d'éléments lumineux (80, 82) et présentant respectivement un espacement variable (84, 86) entre deux éléments lumineux (80, 82) voisins.

4. Dispositif de localisation selon l'une des revendications précédentes, **caractérisé en ce que** l'unité de signaux lumineux (26) comporte un élément lumineux (28, 32), et l'unité de commande (34) en association avec l'élément lumineux (28, 32) permet de marquer un bord (66, 68) du corps de base (12).

5. Dispositif de localisation selon l'une des revendications précédentes, **caractérisé en ce que** l'unité de commande (34) est conçue pour délivrer le signal lumineux en association avec l'unité de signaux lumineux (26) à l'aide d'au moins deux intensités lumineuses positives.

6. Dispositif de localisation selon l'une des revendications précédentes, **caractérisé en ce que** l'unité de commande (34) est destinée à délivrer le signal lumineux en association avec l'unité de signaux lumineux (26) à l'aide d'au moins une fréquence de clignotement.

7. Dispositif de localisation selon l'une des revendications précédentes, **caractérisé par** une interface d'utilisateur (90) prévue pour entrer et/ou délivrer une information de service en coopération avec l'unité de signaux lumineux (26).

8. Dispositif de localisation selon l'une des revendications précédentes, **caractérisé en ce que** l'unité de commande (34) en association avec l'unité de signaux lumineux (26) est conçue pour délivrer une information de localisation (56) concernant un type d'un objet localisé.

9. Dispositif de localisation selon l'une des revendications précédentes, **caractérisé en ce que** l'unité de restitution (20) comporte une unité acoustique (88) destinée à délivrer un signal acoustique, et **en ce que** l'unité de commande (34) est conçue pour attribuer le signal acoustique à un signal lumineux.
